# FASCICULE DE BREVET EUROPEEN

(11) **EP 2 797 840 B1**
(45) Date de publication et mention de la délivrance du brevet: **18.05.2016**
(21) Numéro de dépôt: 12806494.6
(22) Date de dépôt: 21.12.2012
(51) Int. Cl.: C01B 33/037, B01D 1/22

(54) **PROCEDE ET DISPOSITIF DE PURIFICATION DE SILICIUM**
VERFAHREN UND VORRICHTUNG ZUR REINIGUNG VON SILICIUM
PROCESS AND DEVICE FOR PURIFYING SILICON

(30) Priorité: 27.12.2011 FR 1162469
(43) Date de publication de la demande: 05.11.2014
(73) Titulaire: Commissariat à l'Énergie Atomique et aux Énergies Alternatives, 75015 Paris (FR)
(72) Inventeur: BONINO, Olivier, 73100 Aix-Les-Bains (FR); PELLETIER, David, 73000 Chambéry (FR)
(74) Mandataire: Novaimo
(86) Numéro de dépôt international: PCT/EP2012/076619
(87) Numéro de publication internationale: WO 2013/098234

(56) Documents cités:
- EP-A1- 0 304 715
- EP-A1- 0 530 567
- WO-A1-2008/064738
- US-A- 4 242 175
- US-A- 6 036 932

## Description

L'invention concerne un procédé et un dispositif de purification du silicium.

La fabrication de dispositifs photovoltaïques ou électroniques nécessite l'utilisation de silicium très pur. Le silicium métallurgique comprend trop d'impuretés pour de telles applications, et notamment une concentration trop élevée en phosphore, en bore et en certains éléments métalliques comme du fer, de l'aluminium, du cuivre, du titane, etc.

C'est pourquoi des procédés de purification du silicium ont été mis en oeuvre dans l'état de la technique.

Un premier procédé existant consiste en une purification par voie gazeuse. Ce procédé présente l'inconvénient d'un coût très important.

Le document WO2010/126067 décrit un procédé de purification du silicium qui comprend une étape de purification en phosphore par irradiation avec un canon à électron. Ce procédé présente également l'inconvénient d'un coût très important.

Le document WO2011/033188 décrit un autre procédé de purification du silicium qui consiste à appliquer un gradient thermique à du silicium en fusion dans un environnement à pression réduite.

Cette dernière solution présente l'inconvénient de nécessiter pour la purification du silicium en phosphore des durées de traitement très élevées.

Le document US6036932 décrit un dispositif pour purifier le silicium dans lequel le silicium à purifier est disposé en partie haute du dispositif, chauffé, puis transporté par capillarité le long d'une fibre. La pression à l'intérieur du dispositif est abaissée et le silicium est ainsi purifié lors de son transport dans et/ou sur la fibre. Enfin, le silicium purifié est déversé dans un bac de récupération en partie basse du dispositif. Le simple transport par capillarité le long d'une fibre ne permet pas d'atteindre une forte purification.

Le document WO2008/064738 décrit de même un dispositif pour purifier le silicium en vue d'une application pour un dispositif photovoltaïque. Le dispositif de purification comprend un dispositif amont qui prépare le silicium, qui est fondu dans un creuset puis acheminé dans une enceinte basse pression par une conduite. Dans cette enceinte basse pression, le silicium subit une purification par le phénomène d'évaporation. Finalement, le silicium est refroidi et récupéré en partie basse de l'enceinte. Cette solution reste de même insuffisante pour atteindre une purification satisfaisante,

Ainsi, l'objet de l'invention est de proposer une solution de purification du silicium, efficace et à bas coût, compatible avec une application dans le domaine photovoltaïque.

A cet effet, l'invention repose sur un dispositif de purification de silicium en fusion, comprenant une enceinte comprenant un creuset pour stocker le silicium en fusion et un dispositif de chauffage pour chauffer le silicium en fusion contenu dans le creuset,
l'enceinte étant équipée d'un dispositif pour abaisser fortement la pression au sein de l'enceinte, caractérisé en ce qu'il comprend au moins un évaporateur disposé à l'intérieur de l'enceinte pour recevoir une partie du silicium en fusion, de sorte que le silicium en fusion présente une interface importante avec de la vapeur basse pression présente au sein de l'enceinte pour favoriser et accélérer la purification du silicium en fusion et en ce qu'il comprend au moins un dispositif de renouvellement du silicium en fusion dans le au moins un évaporateur.

Le dispositif de purification de silicium en fusion peut comprendre au moins un dispositif de chauffage pour chauffer le silicium en fusion contenu dans le au moins un évaporateur.

Le dispositif de purification peut comprendre un creuset verseur fixe positionné au-dessus d'au moins un évaporateur fixe permettant l'écoulement du silicium en fusion en le purifiant jusqu'à un bac de récupération.

Le dispositif de purification peut comprendre au moins un composant mobile permettant plusieurs circulations du silicium en fusion dans le au moins un évaporateur.

Ainsi, le dispositif de renouvellement du silicium en fusion dans le au moins un évaporateur peut permettre le renouvellement ou la circulation, partiel(le) ou total(e), du silicium en fusion dans le au moins un évaporateur. Le silicium en fusion peut donc effectuer plusieurs séjours ou passages au niveau du même évaporateur durant un même cycle de purification, pour finalement augmenter sa purification totale.

Le dispositif de purification peut comprendre au moins un creuset dans la partie inférieure de l'enceinte, et au moins un évaporateur mobile entre une position haute hors du creuset et une position basse dans laquelle il est au moins partiellement disposé au sein du creuset.

Le dispositif de purification peut comprendre au moins un creuset verseur mobile entre une position haute hors du creuset dans laquelle il est apte à déverser du matériau en fusion sur un évaporateur et une position basse dans laquelle il est au moins partiellement disposé au sein du creuset.

Le dispositif de purification peut comprendre un évaporateur mobile ou un creuset verseur mobile et peut comprendre un axe traversant l'enceinte par une ouverture étanche et un moteur hors de l'enceinte agissant sur l'axe pour mettre en mouvement l'actionnement l'évaporateur mobile ou le creuset verseur mobile.

Le dispositif de chauffage pour chauffer le silicium en fusion contenu dans le creuset et/ou un dispositif de chauffage pour chauffer le silicium en fusion contenu dans le au moins un évaporateur peuvent être de type résistif ou inductif, ou inductif avec une fréquence d'induction comprise entre 50 Hz et 300 MHz inclus.

Le dispositif de purification peut comprendre un dispositif d'agitation du silicium en fusion présent dans le creuset.

Le dispositif de purification peut comprendre au moins un évaporateur comprenant plusieurs plateaux horizontaux ou inclinés au moins partiellement superposés.

L'invention porte aussi sur un procédé de purification de silicium en fusion disposé dans un dispositif de purification tel que décrit ci-dessus, comprenant une étape de chauffage et fusion du silicium en fusion présent dans un creuset du dispositif de purification et d'abaissement de la pression au sein de l'enceinte du dispositif de purification, caractérisé en ce qu'il comprend une étape de positionnement d'au moins une partie du silicium en fusion depuis le creuset vers un évaporateur.

La température du silicium en fusion peut être maintenue supérieure ou égale à 1500°C et la pression dans l'enceinte du dispositif de purification peut être abaissée à une valeur inférieure ou égale à 1 Pascal.

Le procédé de purification de silicium en fusion peut comprendre une étape de purification du silicium en fusion, notamment sa déphosphoration, comprenant une répétition de positionnement puis renouvellement d'une quantité du silicium en fusion sur au moins un évaporateur à partir du silicium en fusion présent dans le creuset du dispositif de purification.

L'étape de purification peut comprendre une étape de renouvellement total ou partiel du silicium en fusion présent sur au moins un évaporateur par immersion de ce au moins un évaporateur dans le creuset du dispositif de purification ou par immersion d'au moins un creuset verseur dans le creuset du dispositif de purification puis versement progressif de son contenu sur au moins un évaporateur.

L'étape de purification du silicium en fusion peut comprendre une étape d'évaporation des impuretés du matériau en fusion présent sur l'évaporateur.

La vitesse d'immersion et de retrait de l'évaporateur ou du creuset-verseur peut être comprise entre 0.5 mm/s et 10 cm/s, ou entre 1 mm/s et 1 cm/s.

Le procédé de purification de silicium en fusion peut comprendre une étape de chauffage du silicium en fusion présent sur l'évaporateur hors du creuset.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement un dispositif de purification du silicium selon un premier mode de réalisation de l'invention.
La figure 2 représente schématiquement le dispositif de purification du silicium dans une seconde configuration selon le premier mode de réalisation de l'invention.
La figure 3 représente schématiquement un dispositif de purification du silicium selon un second mode de réalisation de l'invention.
La figure 4 représente schématiquement un dispositif de purification du silicium selon une variante du second mode de réalisation de l'invention.
La figure 5 représente schématiquement un dispositif de purification du silicium selon un troisième mode de réalisation de l'invention.
La figure 6 représente schématiquement un dispositif de purification du silicium selon une première variante du troisième mode de réalisation de l'invention.
La figure 7 représente schématiquement un dispositif de purification du silicium selon une autre variante du troisième mode de réalisation de l'invention.
Les figures 8 à 11 représentent schématiquement différents évaporateurs compatibles avec un dispositif de purification selon l'invention.
Les figures 12a à 12b représentent schématiquement, respectivement en vue de dessus et en coupe de côté, un autre évaporateur compatibles avec un dispositif de purification selon l'invention.
La figure 13 représente schématiquement la mise en oeuvre d'un procédé de purification du silicium selon un mode de réalisation de l'invention.
La figure 14 représente de même schématiquement la mise en oeuvre du procédé de purification du silicium selon un mode de réalisation de l'invention.

Pour faciliter la compréhension de la description qui va suivre, les mêmes références seront utilisées pour des éléments similaires ou équivalents dans les différents modes et variantes de réalisation.

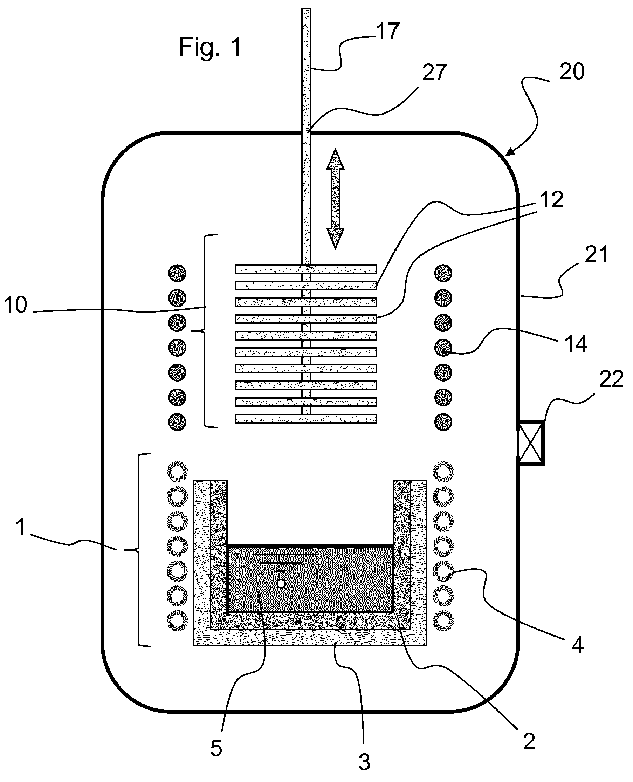

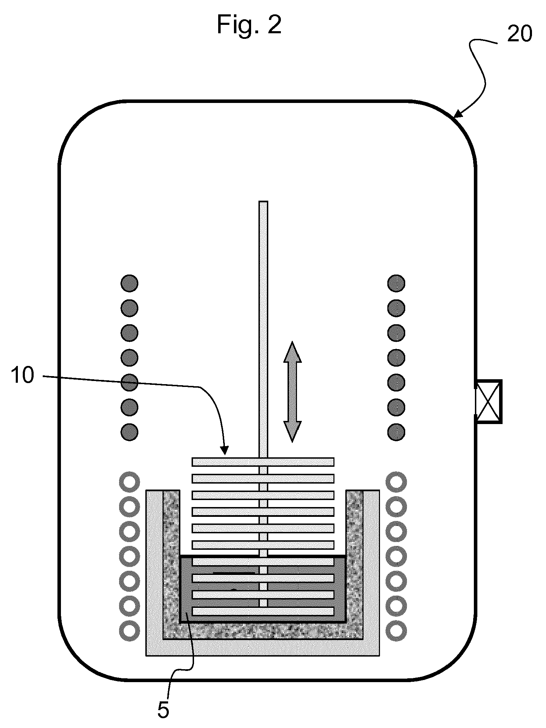

Les figures 1 et 2 illustrent ainsi un dispositif de purification 20 du silicium selon un premier mode de réalisation. Ce dispositif de purification 20 du silicium comprend une partie basse 1 destinée à recevoir un bain de silicium en fusion, et une partie haute dite évaporateur 10 destinée à recevoir une partie du silicium en fusion pour favoriser l'évaporation des impuretés à évacuer, comme le phosphore, afin de purifier le silicium. Ces deux parties haute et basse sont disposées dans une même enceinte 21 étanche comprenant un dispositif 22 pour faire le vide à l'intérieur de l'enceinte 21, qui permet d'abaisser en continu la pression dans l'enceinte (groupe de vide, de pompage).

La partie basse 1 du dispositif de purification du silicium comprend un creuset 2 formant un bac de réception pour un bain 5 de silicium. Ce creuset 2 peut être éventuellement disposé dans un contre-creuset 3 et/ou un isolant. Le creuset peut être par exemple en graphite, ou en tout autre matériau adapté pour contenir du silicium en fusion. Le creuset 2 est de plus associé à un dispositif de chauffage 4, adapté pour monter la température du silicium 5 disposé dans le creuset 2 au-delà de 1500 °C. A titre d'exemple, une charge de 28 kg de silicium métal peut être ainsi contenue dans un creuset en graphite de géométrie cylindrique de rayon intérieur de 15 cm et de 25cm de hauteur, entouré sur les cotés et sur le fond d'un isolant d'environ 1 cm en feutre de graphite. Le dispositif de chauffage 4 du creuset 2 comprend par exemple une spire d'induction qui entoure le creuset et l'isolant éventuel, de géométrie cylindrique (en spirale), et contenue dans l'enceinte 21 à vide du dispositif. La fréquence d'induction choisie est de 420 Hz, mais peut en variante être comprise entre 50 et 100000 Hz inclus, et de préférence entre 50 et 1000Hz. En remarque, le dispositif de chauffage par induction permet de plus de créer une agitation du bain de silicium 5 favorable à sa déphosphoration sous vide. Un système d'agitation spécifique peut néanmoins être prévu à la place ou en complément.

L'évaporateur 10 a pour fonction d'évaporer les impuretés du silicium, comme le phosphore, pour les séparer du silicium. Pour cela, il se caractérise par le fait qu'il crée une grande interface entre le silicium liquide à purifier et la vapeur à très basse pression de l'enceinte 21, afin d'optimiser la quantité de phosphore qui s'échappe du silicium du fait de la différence de tension de vapeur entre le phosphore et le silicium. De manière similaire, d'autres éléments sont aussi séparés du silicium dans l'évaporateur. Cet évaporateur remplit de cette manière une fonction d'évaporation de certaines impuretés contenues dans le silicium, selon une vitesse et un rendement significativement supérieur à un phénomène d'évaporation qui peut se produire à la surface du simple bain de silicium 5 comme celui contenu dans le creuset 2 car l'interface silicium liquide / vapeur est plus grande et la température au niveau de l'évaporateur peut être plus élevée.

Dans ce mode de réalisation, l'évaporateur 10 est mobile en translation verticale relativement au creuset 2, de sorte à pouvoir descendre dans le bain de silicium 5 contenu dans le creuset 2 dans sa position basse, illustrée par la figure 2. Ensuite, l'évaporateur remonte hors du creuset 2, chargé de silicium en fusion, dans sa position haute illustrée par la figure 1. En position basse, le bas de l'évaporateur peut être localisé juste au-dessus du fond du creuset, et en position haute, le bas de l'évaporateur peut se trouver à environ 15 cm au-dessus du creuset. L'évaporateur 10 est mobile par l'intermédiaire d'un dispositif motorisé disposé hors de l'enceinte 21, non représenté, qui permet de générer les mouvements de translation verticale de l'évaporateur via un axe 17 solidaire de l'évaporateur 10 et passant au travers une ouverture 27 étanche de l'enceinte 21.

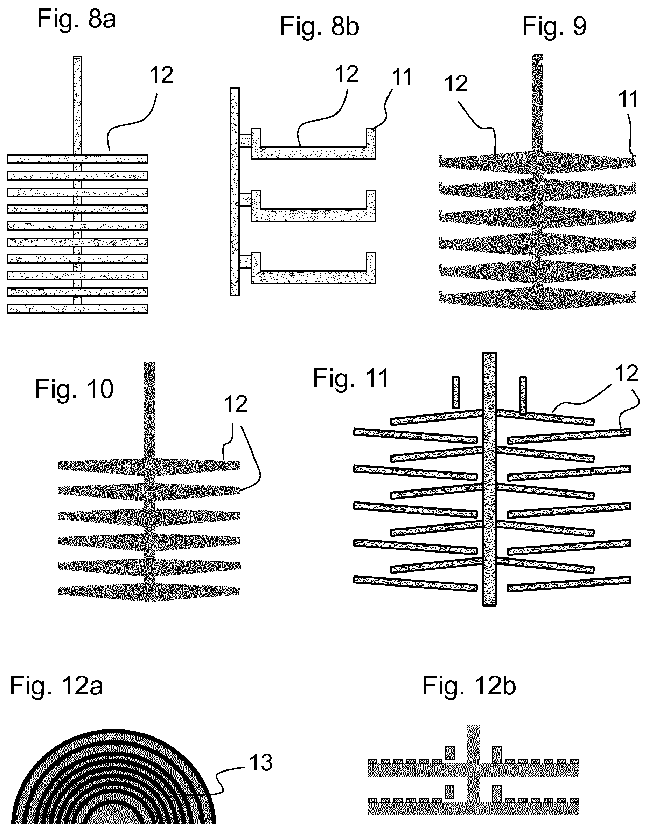

Ce mouvement de l'évaporateur 10 permet de remplir ou de recouvrir de silicium fondu ses plateaux 12 horizontaux, plus particulièrement représentés par les figures 8a et 8b, qui forment des réservoirs de grande surface. Selon une réalisation, l'évaporateur comprend un empilement de plateaux 12 superposés tous les 2 cm et reliés par un axe 17, chaque plateau présentant une forme de disques de rayon 10 cm et d'épaisseur 1 cm. Les plateaux sont horizontaux, terminés à leur bord par une marche de l'ordre d'un millimètre formant ainsi un réservoir qui permet de contenir du silicium liquide.

L'évaporateur 10 est de plus avantageusement associé à un dispositif de chauffage 14, aménagé dans la partie haute de l'enceinte 2, afin de permettre de chauffer le silicium présent sur l'évaporateur quand ce dernier est hors du creuset 2 dans sa position haute, et ainsi favoriser le phénomène d'évaporation explicité précédemment. Ce dispositif de chauffage 14 peut être de même réalisé avec une spire d'induction, contenue dans la partie haute de l'enceinte, de géométrie cylindrique (en spirale), de sorte à entourer l'évaporateur lorsqu'il est localisé en position haute. La fréquence d'induction est de 10 kHz, et peut être en variante comprise entre 2 kHz et 300 MHz inclus. Comme pour le creuset 2, l'évaporateur peut être par exemple en graphite.

En variante, les deux dispositifs de chauffage 4, 14 des parties basse et haute du dispositif de purification de silicium peuvent prendre toute autre forme que celle décrite ci-dessus. Notamment, ils peuvent être de type résistif, ou inductif avec d'autres fréquences d'induction que celles mentionnées. De plus, dans le cas d'un chauffage par induction, le dispositif de chauffage 4, 14 peut être à l'extérieur ou à l'intérieur de l'enceinte à chauffer. Selon une variante de réalisation, il est avantageux de prévoir une spire d'induction isolée thermiquement de l'évaporateur pour minimiser les pertes thermiques par rayonnement. On peut prévoir pour cela de disposer un feutre de graphite entre les spires et l'évaporateur. Le dispositif de chauffage 14 par induction de l'évaporateur 10 peut être couplé à un suscepteur pour transmettre la chaleur. Il peut être réalisé directement dans le corps de l'évaporateur. Les deux dispositifs de chauffage 4, 14 mentionnés peuvent être distincts ou en variante appartenir à un seul et même dispositif de chauffage, qui peut en option offrir des puissances de chauffage différentes dans les deux zones haute et basse de l'enceinte 21.

L'enceinte 21 peut être de plus équipée d'au moins une entrée et une sortie supplémentaires, distinctes ou non, non représentées sur les figures 1 et 2, pour une alimentation automatisée en silicium liquide à purifier d'une part, et la récupération du silicium purifié d'autre part. Pour cela, elle peut par exemple être équipée d'un sas d'entrée-sortie. En variante, il peut être prévu une introduction du silicium à purifier sous forme solide. On peut également prévoir d'ouvrir l'enceinte pour charger le silicium, de la refermer pour ensuite réaliser la purification et enfin la rouvrir pour récupérer le silicium purifié.

Avantageusement, un collecteur en graphite (non représenté) peut également être prévu dans l'enceinte pour récupérer le silicium vapeur, évaporé durant la purification, sous forme de condensats. Ce collecteur peut être placé entre la spire/l'isolant thermique et l'évaporateur ainsi qu'au dessus de l'évaporateur. Sa forme peut être optimisé pour récupérer en partie basse le silicium qui s'écoule dans un récupérateur.

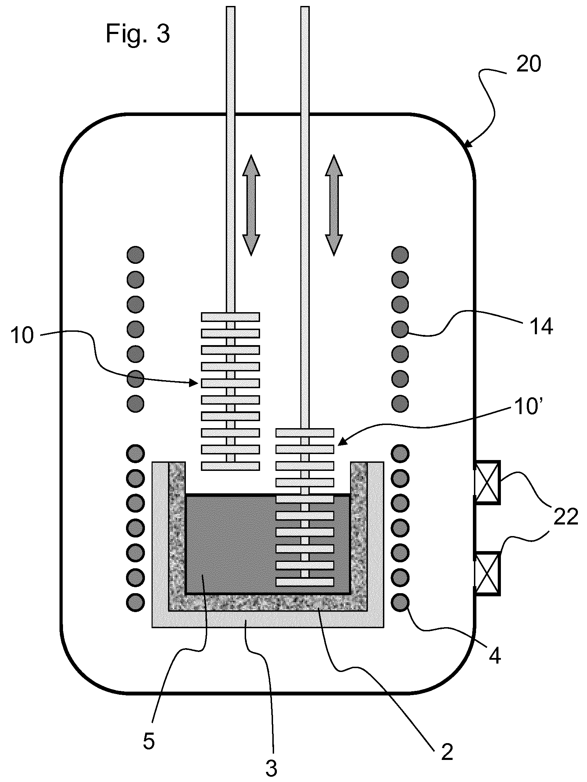

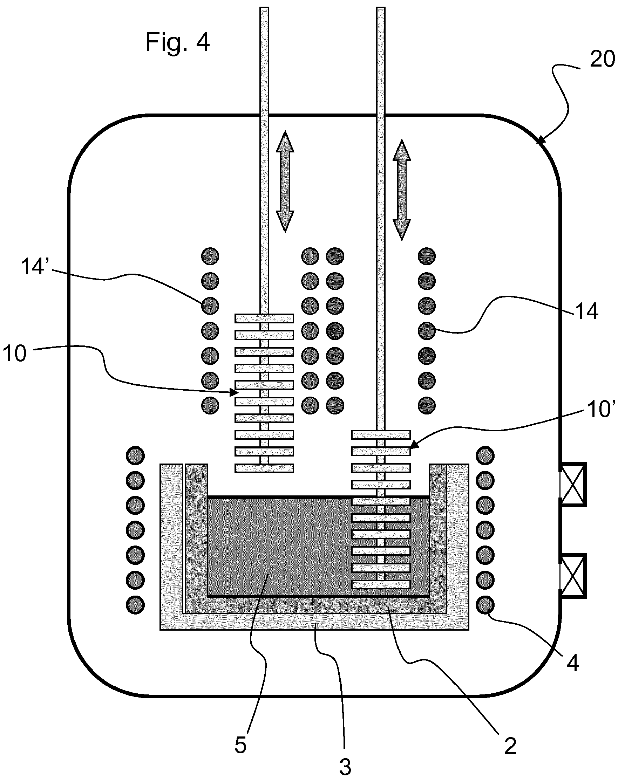

Les figures 3 et 4 illustrent un second mode de réalisation de l'invention, dans lequel le dispositif de purification 20 du silicium diffère du mode de réalisation précédent en ce qu'il comprend deux évaporateurs 10, 10' mobiles en translation dans la même enceinte 21, aptes à descendre au sein du même creuset 2 ou à se trouver au-dessus et hors de ce creuset 2. Les deux réalisations de ces deux figures représentent deux variantes de réalisation. Sur la première réalisation de la figure 3, un unique dispositif de chauffage 14 est prévu en partie haute de l'enceinte 21, qui chauffe les deux évaporateurs 10, 10', lorsqu'ils sont en position haute. Sur la variante de la figure 4, deux dispositifs de chauffage distincts 14, 14' sont prévus en partie haute de l'enceinte 21, pour respectivement chauffer indépendamment chacun des deux évaporateurs 10, 10'. En variante, tout autre nombre d'évaporateurs, supérieur à 2, est aussi envisageable dans l'enceinte 21. En remarque, les mouvements des deux évaporateurs peuvent être coordonnés (en phase ou en déphasage par exemple) ou complètement indépendants.

Dans les modes de réalisation décrits ci-dessus, l'alimentation et le renouvellement du silicium sur le ou les évaporateur(s) est donc obtenu par la mobilité de cet ou ces évaporateur(s), notamment par leur possibilité d'immersion au sein du creuset.

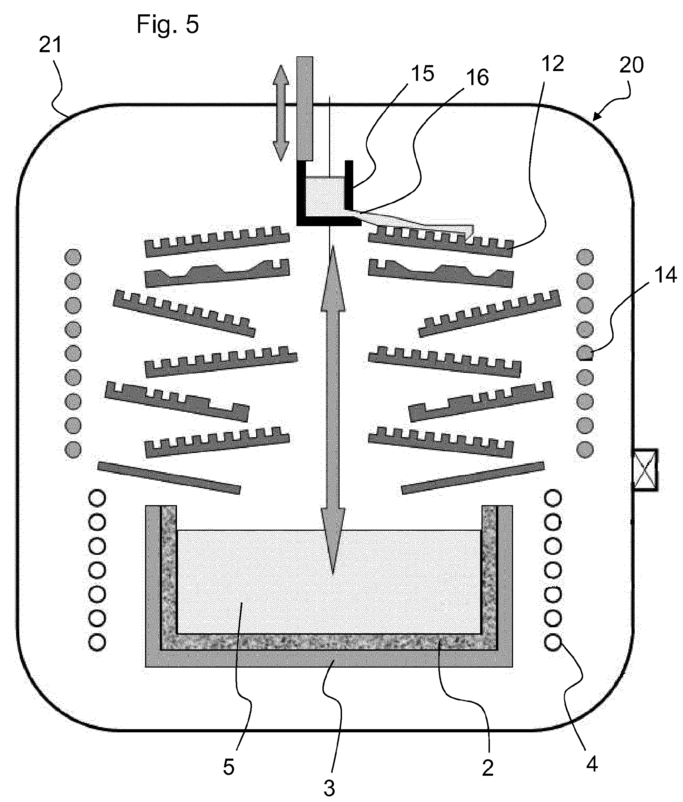

Les figures 5 à 6 illustrent un troisième mode de réalisation de l'invention, dans lequel le dispositif de purification 20 comprend un creuset verseur 15, mobile en translation verticale entre une position haute, dans laquelle il peut déverser du silicium sur l'évaporateur 10, qui est fixe dans cette réalisation, et une position basse au sein du creuset 2 afin de remplir son volume de stockage de silicium en fusion. Dans l'exemple illustré, le creuset présente un ou plusieurs orifices dans sa partie inférieure par lesquels le silicium liquide peut s'écouler. L'écoulement sur l'évaporateur peut ainsi avoir lieu non seulement en position haute mais aussi pendant le déplacement du creuset verseur. En variante, le creuset verseur peut ne pas présenter d'orifice : il peut être alors associé à un mécanisme de basculement pour permettre l'écoulement du silicium par le haut du creuset verseur. En variante non représentée, plusieurs creusets verseurs 15 peuvent être cumulés.

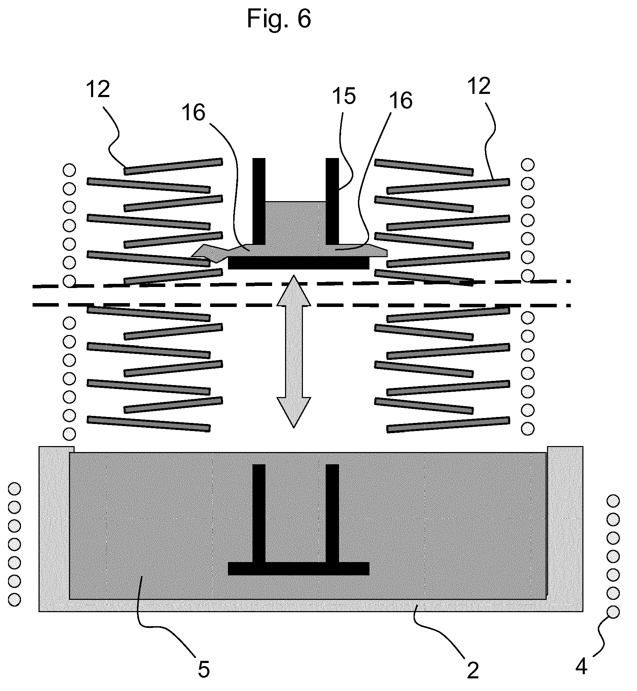

Le dispositif de purification représenté sur la figure 6 diffère très légèrement de la réalisation illustrée sur la figure 5 par la forme du bec verseur et la forme de l'évaporateur.

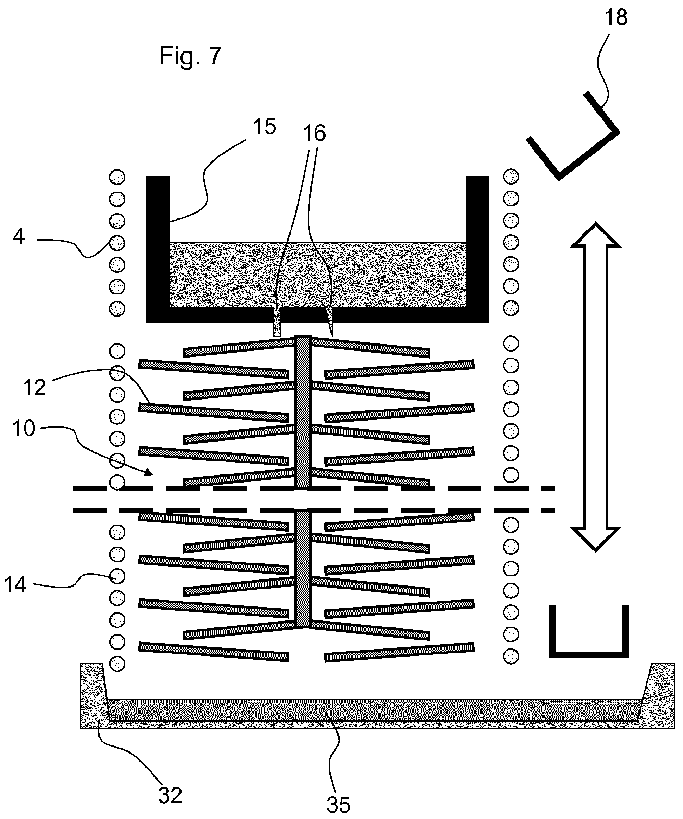

La variante de réalisation illustrée par la figure 7 comprend un creuset verseur 15 fixe et de taille plus importante, s'apparentant au creuset 2 des modes de réalisation précédents. Il déverse progressivement le silicium en fusion sur l'évaporateur 10 qui le conduit lentement jusqu'à un simple bac de récupération 32 positionné en partie basse, et qui stocke le silicium 35. Un composant 18 est mobile entre une position basse dans laquelle il peut récupérer du silicium en fusion au sein du bac de récupération 32 et une position haute dans laquelle il peut verser son contenu dans le creuset verseur 15. Ce composant 18 mobile peut avantageusement se présenter sous la forme d'un creuset muni de moyen de chauffage pour maintenir le silicium liquide. Il permet ainsi de mettre en oeuvre une circulation ininterrompue de silicium en fusion sur l'évaporateur 10.

Comme cela a été vu précédemment, la solution retenue utilise au moins un évaporateur, distinct du creuset 2 ou du creuset verseur 15 de stockage d'un bain de silicium, qui génère une interface importante entre le silicium liquide et la vapeur à basse pression de l'enceinte 21, pour obtenir un effet performant d'évaporation des impuretés. Cette approche permet d'augmenter fortement la vitesse de déphosphoration par rapport à un seul bain de silicium liquide contenu dans un creuset.

D'autre part, le dispositif comprend un composant mobile qui permet la recirculation ou le renouvellement du silicium en fusion sur l'évaporateur. Une telle solution permet de minimiser l'encombrement de l'évaporateur et de sa surface active puisqu'il est possible d'obtenir le résultat souhaité, en termes de purification du silicium, en fixant les itérations (recirculations, renouvellement) du silicium sur un évaporateur autant de fois que cela est nécessaire. Le silicium peut ainsi effectuer plusieurs passages dans le même évaporateur lors d'un cycle de purification. A surface d'évaporateur constante, il est possible d'obtenir un taux de pureté modulable pour le silicium, et notamment le taux de phosphore souhaité, simplement en jouant sur le temps de traitement et donc indirectement sur le nombre de recirculations du silicium en fusion sur l'évaporateur. Cette approche permet ainsi d'obtenir une purification très importante avec un dispositif de faible encombrement.

L'évaporateur peut prendre différentes formes.
Les figures 8 à 12a-12b illustrent à cet effet schématiquement plusieurs réalisations possibles d'un évaporateur. Chacun d'entre eux peut être utilisé dans tous les modes de réalisation du dispositif de purification 20 décrits précédemment.

La figure 8a représente l'évaporateur utilisé dans les modes de réalisation décrits précédemment en référence avec les figures 1 à 4, qui comprend des plateaux 12 horizontaux superposés formant des réservoirs de stockage de silicium. La figure 8b montre une vue en coupe de quelques plateaux 12 horizontaux formant des réservoirs, délimités par des rebords 11. La figure 9 représente une variante dans laquelle les plateaux 12 sont inclinés, et dans laquelle leur extrémité comprend un rebord 11. Dans la variante de la figure 10, ces rebords 11 sont supprimés. La figure 11 représente une autre variante comprenant une alternance de plateaux 12 d'inclinaison opposée, permettant de former des rampes de guidage pour un long écoulement du silicium jusqu'au bas du plateau inférieur, avant son retour dans le creuset. Les figures 12a et 12b représentent une dernière variante sous forme cylindrique, présentant une surface plane possédant des obstacles circulaires.

Dans tous les cas, la géométrie de l'évaporateur est donc choisie pour obtenir une grande interface entre le silicium qu'il contient et la vapeur de l'enceinte, pendant un temps suffisant pour obtenir une purification choisie. Pour cela, l'évaporateur peut finalement comprendre les caractéristiques suivantes :
- formation d'un long écoulement ou grande surface de stockage du silicium, par l'utilisation de plusieurs niveaux superposés, formant des surfaces planes ou inclinées, avec éventuellement des obstacles, chicanes, réservoirs verseurs, canaux, etc., pour ralentir un écoulement ou étaler le silicium. Pour cela, les solutions envisagées précédemment reposent sur des plateaux horizontaux permettant un stockage de grande surface, ou sur des plateaux inclinés permettant un lent écoulement du silicium de plateau en plateau ;
- ainsi, l'évaporateur comprend au moins un plateau pouvant contenir une épaisseur de silicium petite en comparaison avec la surface supérieure de cette quantité de silicium, qui se présente ainsi sous la forme d'une pellicule ou de fine couche de matière ;
- l'évaporateur prévoit aussi un retour final du silicium vers le creuset, soit par un écoulement direct soit par tout moyen indirect.

Naturellement, d'autres modes de réalisation d'un dispositif de purification peuvent être imaginés, notamment en combinant différemment les différents composants exposés précédemment. De plus, il est possible d'imaginer toute autre mobilité d'un évaporateur ou d'un creuset verseur, non nécessairement en simple translation, même si cette solution présente l'avantage de la simplicité. De plus, tout autre dispositif permettant de renouveler périodiquement une certaine quantité de silicium sur un évaporateur, en réalisant un transfert de silicium entre un creuset et un évaporateur, peut être implémenté.

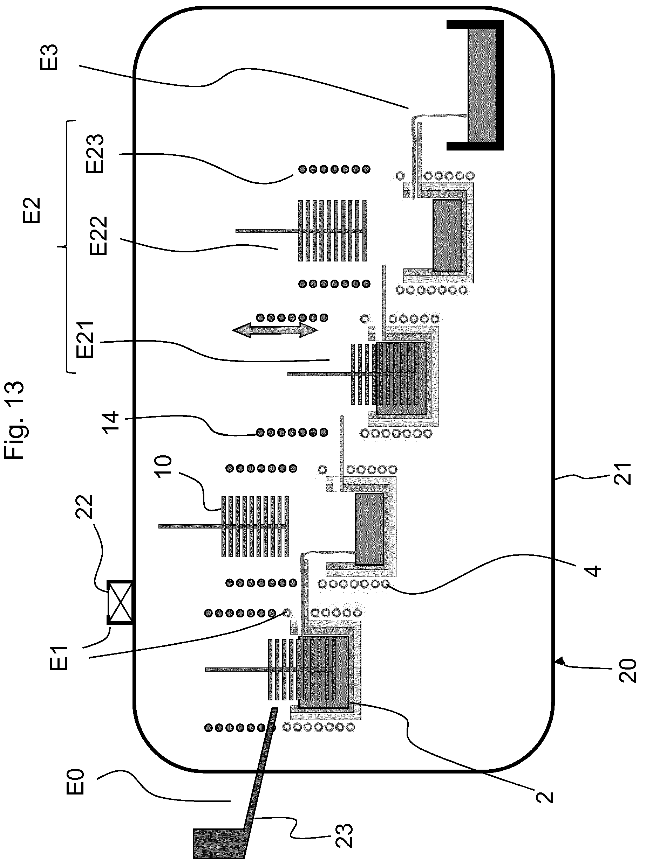

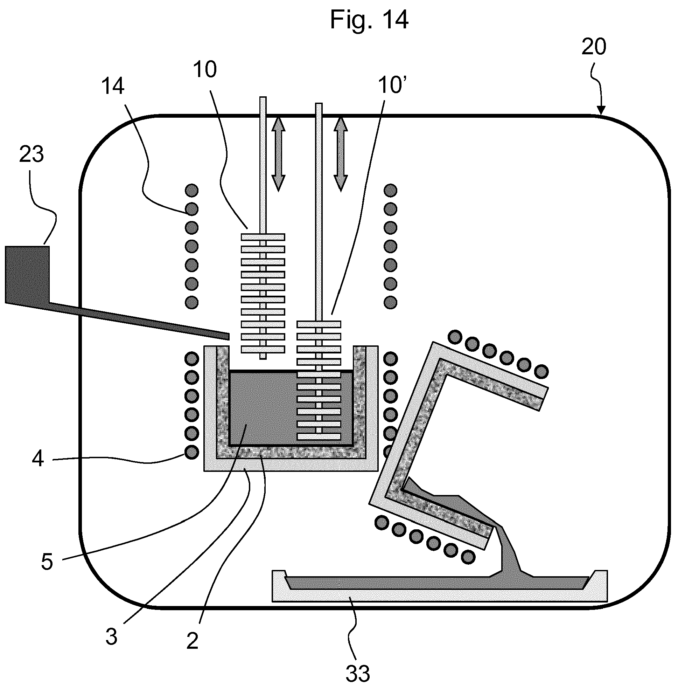

Le fonctionnement d'un dispositif de purification du silicium tel que décrit précédemment va maintenant être détaillé. Il permet la mise en oeuvre d'un procédé de purification avantageux, illustré schématiquement par les figures 13 et 14.

Dans une étape préalable E0, une certaine quantité de silicium est introduite dans le dispositif de purification 20, par un dispositif d'introduction 23. Ce silicium peut être introduit sous forme solide, ou liquide, éventuellement déjà à haute température. Cette introduction se fait avantageusement dans un creuset 2, qui peut être resté chaud pour optimiser la productivité du dispositif en évitant des descentes puis montées en température.

Lorsque cette introduction de silicium est terminée, le procédé comprend une étape E1 consistant à porter le dispositif à haute température, pour obtenir un bain 5 de silicium fondu, et maintenu dans cet état liquide. La température du bain de silicium présent dans le creuset reste ainsi supérieure à la température de fusion du silicium (1420 °C), et avantageusement supérieure à 1500°C.
En parallèle, la pression dans l'enceinte 21 du dispositif est fortement réduite, sous une valeur maximale de fonctionnement. Cette valeur maximale de la pression de vapeur est inférieure à 1 Pascal et avantageusement inférieure ou égale à 0,1 Pascal.

Lorsque les conditions précédentes sont atteintes, l'étape de purification E2 du silicium est engagée, et notamment sa déphosphoration. Cette étape consiste en une répétition de phases de traitement du silicium dans le ou les évaporateur(s). A chaque phase de traitement, tout ou partie du silicium introduit dans le dispositif de purification est réparti sur les plateaux d'un évaporateur. Lors de ce séjour sur l'évaporateur, le silicium va être fortement purifié, du fait de sa surface importante en vis-à-vis de la vapeur très basse pression de l'enceinte 21 du dispositif et de la température élevée du silicium liquide sur l'évaporateur, comme cela a été explicité précédemment.

Entre chaque phase de traitement, le procédé de purification comprend une étape E21 de renouvellement total ou partiel du silicium présent sur l'évaporateur 10. Ce renouvellement est obtenu soit par immersion d'un ou plusieurs évaporateur(s) au sein du creuset contenant le bain de silicium, soit par immersion d'un ou plusieurs creuset(s) verseur(s), soit par tout autre dispositif équivalent qui permet le transfert d'au moins une partie du silicium d'un bain de stockage vers l'évaporateur. L'immersion d'un composant dans le bain de silicium lors de cette étape présente l'avantage d'induire un effet supplémentaire d'agitation du bain de silicium, favorable à son traitement. En variante, tout autre dispositif d'agitation peut être utilisé, fonctionnant par exemple par induction. Cette agitation augmente le phénomène de purification du silicium présent dans le creuset.

Après cette immersion, ou plus généralement après le transfert de silicium sur l'évaporateur, une étape d'évaporation E22 des impuretés du silicium présent sur l'évaporateur est réalisée (l'éventuel composant immergé est remonté hors du creuset). Dans le cas de l'immersion d'un ou plusieurs évaporateur(s), une partie du silicium liquide reste sur les plateaux 12 de l'évaporateur lors de sa remontée. Dans le cas de l'immersion d'un bec verseur, une partie du silicium est remontée dans ce bec verseur, et se déverse progressivement sur les plateaux de l'évaporateur. Les vitesses d'immersion et de retrait de l'évaporateur ou du creuset-verseur du bain de silicium sont telles qu'elles ne provoquent pas de projection de silicium liquide hors des outillages prévus pour récupérer le silicium liquide. Pour cela, ces vitesses d'immersion et de retrait sont de préférence comprises entre 0.5 mm/s et 10 cm/s, et avantageusement entre 1 mm/s et 1 cm/s.

Dans l'exemple d'implémentation décrit en référence avec les figures 1 et 2, l'évaporateur peut se déplacer en translation verticale à une vitesse de 3 cm/s, et peut rester en position haute 30 secondes avant une nouvelle immersion.

Lors de cette phase de traitement, le procédé de purification comprend avantageusement une autre étape de chauffage E23 du silicium présent sur l'évaporateur hors du creuset, par un dispositif de chauffage 14 en partie haute de l'enceinte mentionné précédemment. Ce chauffage permet avantageusement de maintenir une température du silicium sur l'évaporateur supérieure à 1500 °C, voire au-delà, et permet ainsi d'accélérer la cinétique de purification. Plus cette température sera élevée, plus la cinétique de purification sera importante.

Pendant toute cette étape de purification E2, le chauffage du creuset 2, et éventuellement de l'évaporateur, est régulé de façon à maintenir le silicium liquide dans le creuset 2 proche d'une température moyenne qui peut être par exemple fixée à 1630°C, et en tous cas supérieure ou égale à 1420 °C, température de fusion du silicium.

Le temps de traitement est prédéfini en fonction du résultat souhaité, notamment de la déphosphoration recherchée. Lorsque ce traitement est jugé suffisant, les phases de traitement décrites ci-dessus sont arrêtées, l'étape de purification E2 est terminée. Dans le cas d'un évaporateur ou creuset verseur mobile, ce composant est repositionné hors du bain de silicium.

Lorsque l'étape de purification E2 est terminée, la température du silicium est abaissée à une température de coulée, par exemple de 1500 °C, pour engager une étape de sortie E3 du silicium purifié de l'enceinte du dispositif de purification. Le silicium peut par exemple être coulé dans une lingotière. En variante, cette coulée peut être réalisée à l'intérieur de l'enceinte.

La figure 14 illustre par exemple une réalisation particulière de cette étape de sortie E3 du silicium. Cette étape est mise en oeuvre à l'aide d'un dispositif de purification de silicium qui comprend un creusé monté sur un bloc basculant, pour prendre une position inclinée qui permet la coulée du silicium liquide purifié. Cette coulée peut se faire dans une lingotière 33.

En variante, la solidification du silicium peut être réalisée directement dans le creuset, de manière pilotée, par exemple à l'aide des dispositifs de chauffage de l'enceinte, pour maitriser les phénomènes de dilatation du silicium.

Ce procédé de purification de silicium peut être mis en oeuvre à l'aide d'une seule enceinte 21, telle que celles illustrées par les figures 1 à 7, ou en variante à partir de plusieurs bains de silicium équipés chacun d'un ou plusieurs évaporateur(s), au sein d'enceintes distinctes ou d'une même enceinte, afin de réaliser le traitement à la chaîne dans les différents bains en série, comme particulièrement représenté par la figure 13.

Le principe décrit précédemment est applicable à toute quantité de silicium, pouvant varier par exemple de 200 grammes à 1,5 tonne de silicium par creuset. Il permet d'obtenir un silicium purifié dont la teneur en phosphore peut être très faible, jusqu'à des teneurs inférieures ou égales à 0,1 ppmw. Naturellement, ce procédé agit sur plusieurs éléments présents dans le silicium et permet aussi de le purifier, outre le phosphore, de l'aluminium, du calcium, du zinc, de l'étain, du plomb, du bismuth, du sodium, du magnésium, du manganèse, du potassium, de l'arsenic...
La solution retenue présente finalement les avantages suivants :
- elle est compatible avec une implémentation industrielle, puisqu'elle permet d'atteindre une vitesse satisfaisante pour obtenir du silicium purifié à bas coût. Par exemple, un test d'utilisation d'un dispositif de purification avec un évaporateur chauffé à environ 1750°C et avec une charge de silicium de 15 kg chauffée à 1630°C dans le creuset, montre qu'un traitement de 5 heures permet de passer de 15 ppmw à 0.3 ppmw de phosphore ;
- elle peut fonctionner avec tout état initial du silicium, solide ou liquide, et avec tout type de silicium ;
- elle permet d'atteindre une purification du silicium compatible avec des applications de type photovoltaïque ;
- elle permet de purifier en phosphore du silicium provenant d'anciennes cellules solaires ;
- elle reste compatible avec d'autres procédés de purification, peut être combinée avec ces autres procédés ;

## Revendications

1. Dispositif de purification (20) de silicium en fusion, comprenant une enceinte (21) comprenant un creuset (2; 15) pour stocker le silicium en fusion et un dispositif de chauffage (4) pour chauffer le silicium en fusion contenu dans le creuset, l'enceinte étant équipée d'un dispositif (22) pour abaisser fortement la pression au sein de l'enceinte, **caractérisé en ce qu'**il comprend au moins un évaporateur (10 ; 10, 10') disposé à l'intérieur de l'enceinte pour recevoir une partie du silicium en fusion, de sorte que ce silicium en fusion présente une interface importante avec de la vapeur basse pression présente au sein de l'enceinte (21) pour favoriser et accélérer la purification du silicium en fusion et **caractérisé en ce qu'**il comprend au moins un dispositif de renouvellement ou recirculation du silicium en fusion dans le au moins un évaporateur (10 ; 10, 10').

2. Dispositif de purification (20) de silicium en fusion selon la revendication précédente, **caractérisé en ce qu'**il comprend au moins un dispositif de chauffage (14 ; 14, 14') pour chauffer le silicium en fusion contenu dans le au moins un évaporateur (10 ; 10, 10').

3. Dispositif de purification (20) de silicium en fusion selon l'une des revendications 1 ou 2, **caractérisé en ce qu'**il comprend un creuset verseur (15) fixe positionné au-dessus d'au moins un évaporateur (10) fixe permettant l'écoulement du silicium en fusion en le purifiant jusqu'à un bac de récupération (32).

4. Dispositif de purification (20) de silicium en fusion selon l'une des revendications précédentes, **caractérisé en ce qu'**il comprend au moins un composant (10; 15; 18) mobile permettant plusieurs circulations du silicium en fusion dans le au moins un évaporateur (10 ; 10, 10').

5. Dispositif de purification (20) de silicium en fusion selon la revendication précédente, **caractérisé en ce qu'**il comprend au moins un creuset (2) dans la partie inférieure de l'enceinte (21), et au moins un évaporateur (10 ; 10, 10') mobile entre une position haute hors du creuset (2) et une position basse dans laquelle il est au moins partiellement disposé au sein du creuset (2).

6. Dispositif de purification (20) de silicium en fusion selon la revendication 4, **caractérisé en ce qu'**il comprend au moins un creuset verseur (15) mobile entre une position haute hors du creuset (2) dans laquelle il est apte à déverser du silicium en fusion sur un évaporateur (10) et une position basse dans laquelle il est au moins partiellement disposé au sein du creuset (2).

7. Dispositif de purification (20) de silicium en fusion selon l'une des revendications 5 ou 6, **caractérisé en ce qu'**un évaporateur (10) mobile ou un creuset verseur (15) mobile comprend un axe (17) traversant l'enceinte (21) par une ouverture étanche (27) et un moteur hors de l'enceinte agissant sur l'axe (17) pour mettre en mouvement l'actionnement l'évaporateur (10) mobile ou le creuset verseur (15) mobile.

8. Dispositif de purification (20) de silicium en fusion selon l'une des revendications précédentes, **caractérisé en ce que** le dispositif de chauffage (4) pour chauffer le silicium en fusion contenu dans le creuset et/ou un dispositif de chauffage (14 ; 14, 14') pour chauffer le silicium en fusion contenu dans le au moins un évaporateur (10 ; 10, 10') est/sont de type résistif ou inductif, ou inductif avec une fréquence d'induction comprise entre comprise entre 50 Hz et 300 MHz inclus.

9. Dispositif de purification (20) de silicium en fusion selon l'une des revendications précédentes, **caractérisé en ce qu'**il comprend un dispositif d'agitation du silicium en fusion présent dans le creuset.

10. Dispositif de purification (20) de silicium en fusion selon l'une des revendications précédentes, **caractérisé en ce qu'**il comprend au moins un évaporateur (10) comprenant plusieurs plateaux (12) horizontaux ou inclinés au moins partiellement superposés.

11. Procédé de purification silicium en fusion disposé dans un dispositif de purification (20) selon l'une des revendications précédentes, comprenant une étape (E1) de chauffage et fusion du silicium en fusion présent dans un creuset (2 ; 15) du dispositif de purification (20) et d'abaissement de la pression au sein de l'enceinte (21) du dispositif de purification (20), **caractérisé en ce qu'**il comprend une étape de positionnement d'au moins une partie du silicium en fusion depuis le creuset vers un évaporateur (10) et une étape de renouvellement ou recirculation (E21) total ou partiel du silicium en fusion présent sur le au moins un évaporateur (10 ; 10, 10').

12. Procédé de purification de silicium en fusion selon la revendication précédente, **caractérisé en ce que** la température du silicium en fusion est maintenue supérieure ou égale à 1500°C et **en ce que** la pression dans l'enceinte (21) du dispositif de purification est abaissée à une valeur inférieure ou égale à 1 Pascal.

13. Procédé de purification de silicium en fusion selon la revendication 11 ou 12, **caractérisé en ce qu'**il comprend une étape de purification (E2) du silicium en fusion, notamment sa déphosphoration, comprenant une répétition de positionnement puis renouvellement d'une quantité de silicium en fusion sur au moins un évaporateur (10 ; 10, 10') à partir du silicium en fusion présent dans le creuset (2 ; 15) du dispositif de purification (20).

14. Procédé de purification de silicium en fusion selon la revendication précédente, **caractérisé en ce que** l'étape de purification (E2) comprend une étape de renouvellement (E21) total ou partiel du silicium en fusion présent sur au moins un évaporateur (10 ; 10, 10') par immersion de ce au moins un évaporateur dans le creuset (2) du dispositif de purification (20) ou par immersion d'au moins un creuset verseur (15) dans le creuset (2) du dispositif de purification (20) puis versement progressif de son contenu sur au moins un évaporateur (10 ; 10, 10').

15. Procédé de purification de silicium en fusion selon la revendication précédente, **caractérisé en ce que** l'étape de purification (E2) du silicium en fusion comprend une étape d'évaporation (E22) des impuretés du silicium en fusion présent sur l'évaporateur (10 ; 10, 10').

16. Procédé de purification de silicium en fusion selon la revendication 13 ou 14, **caractérisé en ce que** la vitesse d'immersion et de retrait de l'évaporateur (10; 10, 10') ou du creuset-verseur (15) est comprise entre 0.5 mm/s et 10 cm/s, ou entre 1 mm/s et 1 cm/s.

17. Procédé de purification de silicium en fusion selon l'une des revendications 13 à 16, **caractérisé en ce qu'**il comprend une étape de chauffage (E23) du silicium en fusion présent sur l'évaporateur (10 ; 10, 10') hors du creuset.

## Patentansprüche

1. Vorrichtung zur Reinigung (20) von Siliciumschmelze, die einen Behälter (21) aufweist, der einen Tiegel (2; 15) zum Aufbewahren der Siliciumschmelze und eine Vorrichtung zum Erhitzen (4) aufweist, um die Siliciumschmelze, die in dem Tiegel enthalten ist, zu erhitzen, wobei der Behälter mit einer Vorrichtung (22) zum starken Absenken des Drucks innerhalb des Behälters ausgestattet ist, **dadurch gekennzeichnet, dass** sie mindestens einen Verdampfer (10; 10, 10') aufweist, der im Inneren des Behälters angeordnet ist, um einen Teil der Siliciumschmelze aufzunehmen, so dass die Siliciumschmelze eine große Kontaktoberfläche mit Niederdruckdampf aufweist, der in dem Behälter (21) vorhanden ist, um die Reinigung der Siliciumschmelze zu fördern und zu beschleunigen, und die **dadurch gekennzeichnet ist, dass** sie mindestens eine Vorrichtung zur Erneuerung oder Rückführung der Siliciumschmelze in dem mindestens einen Verdampfer (10; 10, 10') aufweist.

2. Vorrichtung zur Reinigung (20) von Siliciumschmelze nach dem vorhergehenden Anspruch, **dadurch gekennzeichnet, dass** sie mindestens eine Vorrichtung zum Erhitzen (14; 14, 14') aufweist, um die Siliciumschmelze zu erhitzen, die in dem mindestens einen Verdampfer (10; 10, 10') enthalten ist.

3. Vorrichtung zur Reinigung (20) von Siliciumschmelze nach einem der Ansprüche 1 oder 2, **dadurch gekennzeichnet, dass** sie einen festen Tiegel mit Ausguss (15) aufweist, der oberhalb von mindestens einem festen Verdampfer (10) angeordnet ist, der das Abfließen der Siliciumschmelze bei gleichzeitiger Reinigung bis zu einem Rückgewinnungstank (32) ermöglicht.

4. Vorrichtung zur Reinigung (20) von Siliciumschmelze nach einem der vorhergehenden Ansprüche, **dadurch gekennzeichnet, dass** sie mindestens eine bewegliche Komponente (10; 15; 18) aufweist, die mehrere Umläufe der Siliciumschmelze in dem mindestens einen Verdampfer (10; 10, 10') ermöglicht.

5. Vorrichtung zur Reinigung (20) von Siliciumschmelze nach dem vorhergehenden Anspruch, **dadurch gekennzeichnet, dass** sie mindestens einen Tiegel (2) in dem unteren Teil des Behälters (21) und mindestens einen Verdampfer (10; 10, 10') aufweist, der zwischen einer hohen Position außerhalb des Tiegels (2) und einer tiefen Position, in der er mindestens teilweise in dem Tiegel (2) angeordnet ist, bewegbar ist.

6. Vorrichtung zur Reinigung (20) von Siliciumschmelze nach Anspruch 4, **dadurch gekennzeichnet, dass** sie mindestens einen Tiegel mit Ausguss (15) aufweist, der zwischen einer hohen Position außerhalb des Tiegels (2), in der er in der Lage ist, Siliciumschmelze auf einen Verdampfer (10) abzulassen, und einer tiefen Position, in der er mindestens teilweise in dem Tiegel (2) angeordnet ist, bewegbar ist.

7. Vorrichtung zur Reinigung (20) von Siliciumschmelze nach einem der Ansprüche 5 oder 6, **dadurch gekennzeichnet, dass** ein bewegbarer Verdampfer (10) oder ein bewegbarer Tiegel mit Ausguss (15) eine Achse (17), die durch den Behälter (21) über eine dichte Öffnung (27) verläuft, und einen Motor außerhalb des Behälters aufweist, der auf die Achse (17) einwirkt, um die Betätigung des bewegbaren Verdampfers (10) oder des bewegbaren Tiegels mit Ausguss (15) in Bewegung zu setzen.

8. Vorrichtung zur Reinigung (20) von Siliciumschmelze nach einem der vorhergehenden Ansprüche, **dadurch gekennzeichnet, dass** die Erhitzungsvorrichtung (4) zum Erhitzen der Siliciumschmelze, die in dem Tiegel enthalten ist, und/oder eine Erhitzungsvorrichtung (14; 14, 14') zum Erhitzen der Siliciumschmelze, die in dem mindestens einen Verdampfer (10; 10, 10') enthalten ist, resistiv oder induktiv oder induktiv mit einer Induktionsfrequenz im Bereich zwischen einschließlich 50 Hz und 300 MHz ist/sind.

9. Vorrichtung zur Reinigung (20) von Siliciumschmelze nach einem der vorhergehenden Ansprüche, **dadurch gekennzeichnet, dass** sie eine Vorrichtung zum Rühren der Siliciumschmelze aufweist, die in dem Tiegel vorhanden ist.

10. Vorrichtung zur Reinigung (20) von Siliciumschmelze nach einem der vorhergehenden Ansprüche, **dadurch gekennzeichnet, dass** sie mindestens einen Verdampfer (10) aufweist, der mehrere horizontale oder geneigte oder mindestens teilweise übereinander gelegte Platten (12) aufweist.

11. Verfahren zur Reinigung von Siliciumschmelze, die in einer Reinigungsvorrichtung (20) nach einem der vorhergehenden Ansprüche angeordnet ist, das einen Schritt (E1) zum Erhitzen und Schmelzen der Siliciumschmelze, die in einem Tiegel (2; 15) der Reinigungsvorrichtung (20) vorhanden ist, und Absenken des Drucks in dem Behälter (21) der Reinigungsvorrichtung (20) umfasst, **dadurch gekennzeichnet, dass** es einen Schritt zum Anordnen mindestens eines Teils der Siliciumschmelze von dem Tiegel in einen Verdampfer (10) und einen Schritt zum vollständigen oder teilweisen Erneuern oder Rückführen (E21) der Siliciumschmelze, die auf dem mindestens einen Verdampfer (10; 10, 10') vorhanden ist, umfasst.

12. Verfahren zur Reinigung von Siliciumschmelze nach dem vorhergehenden Anspruch, **dadurch gekennzeichnet, dass** die Temperatur der Siliciumschmelze über oder bei 1.500 °C gehalten wird und dadurch, dass der Druck in dem Behälter (21) der Reinigungsvorrichtung auf einen Wert kleiner gleich 1 Pascal abgesenkt wird.

13. Verfahren zur Reinigung von Siliciumschmelze nach Anspruch 11 oder 12, **dadurch gekennzeichnet, dass** es einen Schritt zum Reinigen (E2) der Siliciumschmelze, insbesondere ihre Entphosphorung, umfasst, das ein erneutes Anordnen, dann Erneuern einer Menge an Siliciumschmelze auf mindestens einen Verdampfer (10; 10, 10') ausgehend von der Siliciumschmelze, die in dem Tiegel (2; 15) der Reinigungsvorrichtung (20) vorhanden ist, umfasst.

14. Verfahren zur Reinigung von Siliciumschmelze nach dem vorhergehenden Anspruch, **dadurch gekennzeichnet, dass** der Schritt zum Reinigen (E2) einen Schritt zum vollständigen oder teilweisen Erneuern (E21) der Siliciumschmelze, die auf mindestens einem Verdampfer (10; 10, 10') vorhanden ist, durch Eintauchen dieses mindestens einen Verdampfers in den Tiegel (2) der Reinigungsvorrichtung (20) oder durch Eintauchen von mindestens einem Tiegel mit Ausguss (15) in den Tiegel (2) der Reinigungsvorrichtung (20), dann das allmähliche Gießen seines Inhalts auf mindestens einen Verdampfer (10; 10, 10') umfasst.

15. Verfahren zur Reinigung von Siliciumschmelze nach dem vorhergehenden Anspruch, **dadurch gekennzeichnet, dass** der Schritt zum Reinigen (E2) der Siliciumschmelze einen Schritt zum Verdampfen (E22) der Verunreinigungen der Siliciumschmelze, die auf dem Verdampfer (10; 10, 10') vorhanden ist, umfasst.

16. Verfahren zur Reinigung von Siliciumschmelze nach Anspruch 13 oder 14, **dadurch gekennzeichnet, dass** die Geschwindigkeit des Eintauchens und Wiederherausziehens des Verdampfers (10; 10, 10') oder des Tiegels mit Ausguss (15) im Bereich zwischen 0,5 mm/Sek. und 10 cm/Sek. oder zwischen 1 mm/Sek. und 1 cm/Sek. liegt.

17. Verfahren zur Reinigung von Siliciumschmelze nach einem der Ansprüche 13 bis 16, **dadurch gekennzeichnet, dass** es einen Schritt zum Erhitzen (E23) der Siliciumschmelze, die auf dem Verdampfer (10; 10, 10') vorhanden ist, außerhalb des Tiegels umfasst.

## Claims

1. Device (20) for purifying a molten silicon, comprising a chamber (21) comprising a crucible (2; 15) for storing a molten silicon and a heating device (4) for heating the molten silicon contained in the crucible, the chamber being equipped with a device (22) for greatly lowering the pressure in the chamber, **characterized in that** it comprises at least one evaporator (10; 10, 10') placed inside the chamber to receive part of the molten silicon, such that this molten silicon has a large interface with low-pressure vapour present in the chamber (21) to promote and accelerate the purification of the molten silicon, and **in that** it comprises at least one device for renewing or recirculating the molten silicon in the at least one evaporator (10; 10, 10').

2. Device (20) for purifying a molten silicon according to the preceding claim, **characterized in that** it comprises at least one heating device (14; 14, 14') for heating the molten silicon contained in the at least one evaporator (10 ; 10, 10').

3. Device (20) for purifying a molten silicon according to either of Claims 1 and 2, **characterized in that** it comprises a fixed pouring crucible (15) positioned above at least one fixed evaporator (10) allowing the flow of the molten silicon while purifying it up to a recovery tank (32).

4. Device (20) for purifying a molten silicon according to one of the preceding claims, **characterized in that** it comprises at least one mobile component (10; 15; 18) allowing several circulations of the molten silicon in the at least one evaporator (10; 10, 10').

5. Device (20) for purifying a molten silicon according to the preceding claim, **characterized in that** it comprises at least one crucible (2) in the bottom part of the chamber (21), and at least one evaporator (10; 10, 10') that is mobile between a top position out of the crucible (2) and a bottom position in which it is at least partially placed in the crucible (2).

6. Device (20) for purifying a molten silicon according to Claim 4, **characterized in that** it comprises at least one pouring crucible (15) that is mobile between a top position outside the crucible (2) in which it is capable of versing molten silicon onto an evaporator (10) and a bottom position in which it is at least partially placed in the crucible (2).

7. Device (20) for purifying a molten silicon according to either of Claims 5 and 6, **characterized in that** a mobile evaporator (10) or a mobile pouring crucible (15) comprises an axle (17) passing through the chamber (21) via a leaktight aperture (27) and a motor outside the chamber acting on the axle (17) to actuate the mobile evaporator (10) or the mobile pouring crucible (15).

8. Device (20) for purifying a molten silicon according to one of the preceding claims, **characterized in that** the heating device (4) for heating the molten silicon contained in the crucible and/or a heating device (14; 14, 14') for heating the molten silicon contained in the at least one evaporator (10; 10, 10') is/are of resistive or inductive type, or inductive with an induction frequency of between 50 Hz and 300 MHz inclusive.

9. Device (20) for purifying a molten silicon according to one of the preceding claims, **characterized in that** it comprises a device for stirring the molten silicon present in the crucible.

10. Device (20) for purifying a molten silicon according to one of the preceding claims, **characterized in that** it comprises at least one evaporator (10) comprising several at least partially superposed horizontal or inclined plates (12).

11. Process for purifying a molten silicon placed in a purification device (20) according to one of the preceding claims, comprising a step (E1) of heating and melting the molten silicon present in a crucible (2; 15) of the purification device (20) and lowering the pressure in the chamber (21) of the purification device (20), **characterized in that** it comprises a step of moving at least part of the molten silicon from the crucible to an evaporator (10) and a step (E21) of total or partial renewal or recirculation of the molten silicon present on the at least one evaporator (10; 10, 10').

12. Process for purifying a molten silicon according to the preceding claim, **characterized in that** the temperature of the molten silicon is maintained above or equal to 1500°C and **in that** the pressure in the chamber (21) of the purification device is lowered to a value of less than or equal to 1 pascal.

13. Process for purifying a molten silicon according to Claim 11 or 12, **characterized in that** it comprises a step (E2) of purifying the molten silicon, especially its dephosphoration, comprising a repetition of moving and then renewal of an amount of molten silicon on at least one evaporator (10; 10, 10') using the molten silicon present in the crucible (2; 15) of the purification device (20).

14. Process for purifying a molten silicon according to the preceding claim, **characterized in that** the purification step (E2) comprises a step (E21) of total or partial renewal of the molten silicon present on at least one evaporator (10; 10, 10') by immersing this at least one evaporator in the crucible (2) of the purification device (20) or by immersing at least one pouring crucible (15) in the crucible (2) of the purification device (20) followed by gradual pouring of its contents onto at least one evaporator (10; 10, 10').

15. Process for purifying a molten silicon according to the preceding claim, **characterized in that** the step (E2) of purifying the molten silicon comprises a step (E22) of evaporating the impurities from the molten silicon present on the evaporator (10; 10, 10').

16. Process for purifying a molten silicon according to Claim 13 or 14, **characterized in that** the rate of immersion and of withdrawal of the evaporator (10; 10, 10') or of the pouring crucible (15) is between 0.5 mm/s and 10 cm/s, or between 1 mm/s and 1 cm/s.

17. Process for purifying a molten silicon according to one of Claims 13 to 16, **characterized in that** it comprises a step (E23) of heating the molten silicon present on the evaporator (10; 10, 10') outside the crucible.
